Europäisches Patentamt

**European Patent Office**

**Office européen des brevets**

(11) Numéro de publication: **0 070 247**
**A2**

(12) ## DEMANDE DE BREVET EUROPEEN

(21) Numéro de dépôt: **82420100.8**

(22) Date de dépôt: **13.07.82**

(51) Int. Cl.³: **F 16 B 41/00**

(30) Priorité: **15.07.81 FR 8114114**

(43) Date de publication de la demande:
**19.01.83 Bulletin 83/3**

(84) Etats contractants désignés:
**AT BE CH DE GB IT LI NL SE**

(71) Demandeur: **FRANCAISE D'ACCESSOIRES AUTOMOBILES F2A Société Anonyme**
**Zone Industrielle de la Plaine**
**F-42240 Unieux Loire(FR)**

(72) Inventeur: **Brun, Jean**
**Précieux**
**F-42600 Montbrison(FR)**

(74) Mandataire: **Perrier, Jean-Pierre et al,**
**Cabinet GERMAIN & MAUREAU 12 rue de la République**
**F-42000 St-Etienne(FR)**

(54) **Dispositif anti-vol universel, notamment pour écrous et vis de fixation de roues de véhicules.**

(57) Ce dispositif est du type muni de creux ou saillies (7) aptes à coopérer avec des saillies (6) ou creux complémentaires ménagés à l'une des extrémités d'un organe d'entrainement intermédiaire (2), lui-même pourvu à son autre extrémité d'un profil polygonal (4) complémentaire de celui (5) d'une clé classique (3) de démontage. L'extrémité postérieure de l'adaptateur (1) est agencée en forme de douille (9) d'entrainement d'écrou et comporte des moyens (16) assurant sa liaison indémontable avec l'écrou qu'elle est destiné à coiffer, tandis que son extrémité antérieure comporte des moyens de positionnement de l'organe d'entrainement (2) avec lequel elle coopère.

FIG.4

## Dispositif anti-vol universel, notamment pour écrous et vis de fixation de roues de véhicules.

L'invention est relative à un dispositif anti-vol universel, notamment pour écrous et vis de fixation de roues de véhicules.

On connait déjà des dispositifs empêchant le vol des roues de véhicules en s'opposant au démontage de celles-ci. Selon certains dispositifs connus, les organes de fixation d'origine, c'est-à-dire les écrous vissés sur les extrémités filetées des goujons ou les vis à tête hexagonale assurant l'assemblage des roues, sont remplacés par des organes de fixation spéciaux ne pouvant être manoeuvrés qu'avec une clé spéciale ayant des formes complémentaires de celles de ces organes spéciaux et actionnable elle-même par une clé ordinaire.

En raison du nombre important de types de roues de véhicules, ces organes de fixation spéciaux doivent posséder des formes et dimensions diverses, ce qui conduit à un nombre important de types de ces organes. A cela, il convient d'ajouter que ce nombre est encore multiplié par la présence de goujons ou taraudages de moyeux ayant des filetages de diamètres et pas différents. Pour satisfaire aux besoins du marché, il est donc nécessaire de réaliser des stocks importants et onéreux conduisant finalement à une limitation du nombre de types d'organes spéciaux proposés.

L'invention a pour but de remédier à cet inconvénient en fournissant un dispositif anti-vol qui, permettant de conserver les organes de fixation d'origine, est adaptable à tous les types d'organes de fixation moyennant un très petit nombre de moyens différents, puisque généralement les dimensions sur plat des écrous ou des vis d'assemblage de roues sont de trois types.

Ce dispositif est du type de ceux munis de creux ou saillies aptes à coopérer avec des saillies ou creux complémentaires ménagés à l'extrémité postérieure d'un organe d'entrainement intermédiaire pourvu, à son extrémité

2

antérieure,d'un profil polygonal complémentaire de celüi d'une clé classique de démontage.

Selon l'invention,le dispositif est constitué par un adaptateur dont l'extrémité postérieure est agencée en forme de douille d'entrainement d'écrou et comporte des moyens aptes à réaliser une liaison indémontable entre cet adaptateur et l'organe de fixation qu'il est destiné à coiffer,tandis que son extrémité antérieure,apte à coopérer avec l'organe d'entrainement intermédiaire,comporte des moyens de positionnement transversal et longitudinal de cet organe d'entrainement.

Lorsque l'adaptateur est disposé sur un écrou ou la tête d'une vis,il en interdit l'accès avec une clé classique et s'oppose ainsi à son démontage.Ce démontage ne peut donc être assuré qu'au moyen de l'organe d'entrainement intermédiaire amovible.

D'autres caractéristiques et avantages ressortiront de la description qui suit,en référence au dessin schématique annexé,représentant à titre d'exemples non limitatifs plusieurs formes d'exécution de ce dispositif.

Figure 1 est une vue partielle en coupe d'une première forme d'exécution de ce dispositif dont les différents éléments sont montrés en alignement avant montage sur l'écrou à protéger,

Figure 2 est une vue en coupe longitudinale d'une autre forme d'exécution de l'adaptateur,

Figure 3 est une vue de face en bout de l'extrémité antérieure de cet adaptateur,

Figure 4 est une vue partielle en coupe longitudinale montrant l'adaptateur lorsqu'il est monté sur un écrou et au moment du vissage de ce dernier,

Figure 5 est une vue en perspective montrant une forme d'exécution de la bague compensatrice pouvant être utilisée avec l'adaptateur ,

Figure 6 est une vue de côté avec coupe partielle montrant l'adaptateur muni de la bague compensatrice.

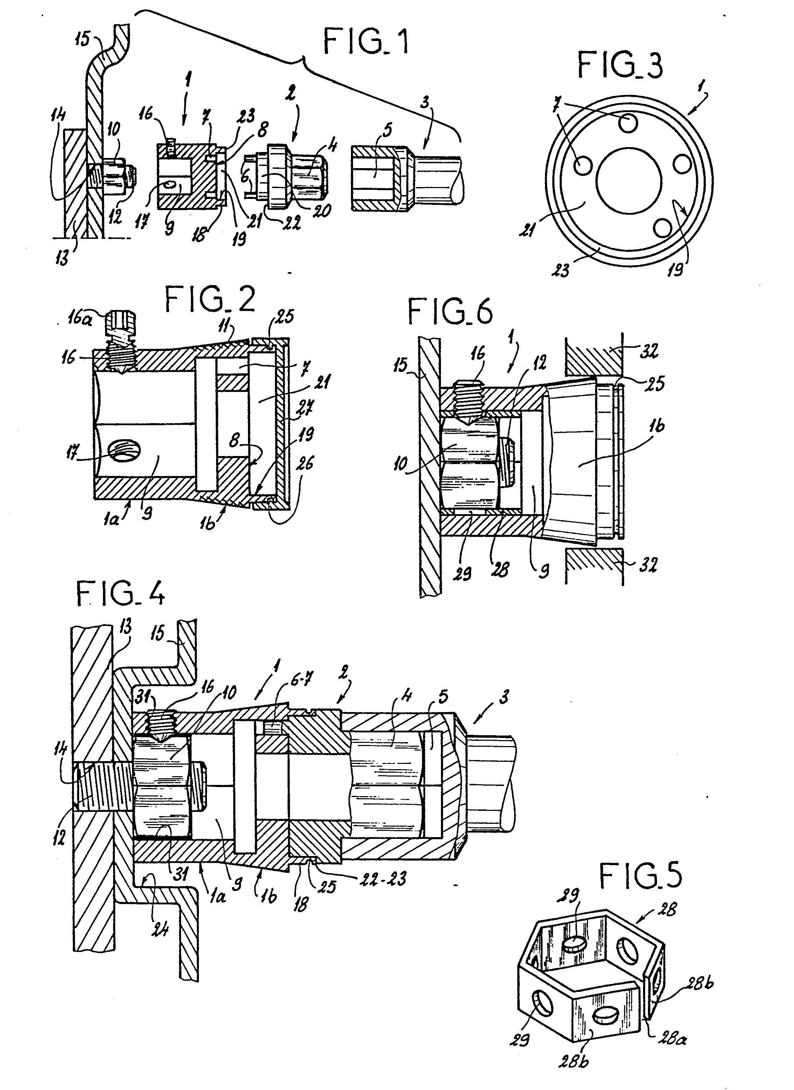

Comme montré à la figure 1,le dispositif selon l'in-

3

vention est composé d'un adaptateur 1,d'un organe d'entrainement intermédiaire 2 apte à coopérer avec une clé classique de serrage 3.De façon connue,l'organe d'entrainement intermédiaire 2 comporte une partie antérieure polygonale 4 apte à recevoir l'empreinte 5 de la clé 3 et,à son extrémité postérieure,des doigts longitudinaux 6 saillants de sa face diamétrale et aptes à coopérer avec des alésages 7 débouchant de la face antérieure 8 de l'adaptateur 1.

L'adaptateur est muni,dans sa partie postérieure, d'une empreinte intérieure 9,de section transversale polygonale et,notamment,hexagonale,apte à coiffer l'organe de liaison constitué par un écrou 10,dans la forme d'exécution représentée.Cet écrou 10 est vissé sur le goujon 12 saillant d'un moyeu 13 et traversant l'un des alésages 14 dont est munie la jante de roue 15.

L'adaptateur est également muni de moyens assurant sa liaison indémontable avec l'écrou 10,moyens qui,dans la forme d'exécution représentée,sont constitués par des vis de pression 16 vissés radialement dans des alésages taraudés 17 traversant radialement l'adaptateur,de manière à déboucher dans l'empreinte 9 et dans les parties de cette empreinte comportant des plats.Les vis 16 peuvent comporter des extrémités plates ou en cuvette,mais de préférence,elles comportent une extrémité conique.

Comme montré à la figure 2,chacune de ces vis 16 est prolongée par une tête 16a,de type auto-cassante,c'est-à-dire susceptible d'être détachée du reste de la vis lorsque celle-ci est correctement positionnée et serrée avec un couple suffisant pour assurer la striction de la tête par rapport à son corps.Après détachement de la tête 16a, la vis 16 a une longueur au plus égale à celle du taraudage 17 correspondant.La liaison indémontable peut aussi être assurée,soit par engagement de force de pions coniques dans des alésages radiaux coniques,débouchant dans l'empreinte,et de manière que ces pions viennent en contact avec l'organe de fixation,soit par une ou plusieurs agrafes intercalées entre l'empreinte et l'organe de fixation,soit par soudure.

L'extrémité antérieure de l'adaptateur est munie d'une collerette 18 qui,saillant de sa face diamétrale 8,délimite un logement interne 21 dont la face périphérique constitue portée de centrage 19 pour une partie cylindrique 20 ménagée à l'extrémité postérieure de l'organe d'entrainement 2. Le diamètre de la portée 19 est égal,au jeu fonctionnel près,à celui de la partie 20 précitée.

Cette portée cylindrique de l'organe 2 a une longueur sensiblement égale à la hauteur de la portée 19 de l'adaptateur 1.Elle est raccordée au corps de l'organe d'entrainement 2 par un épaulement 22 constituant indicateur de positionnement en coopérant avec le bord 23 de l'adaptateur 1.

Pour empêcher le vol d'une roue de véhicule,un seul dispositif selon l'invention est mis en place sur l'un des organes de fixation de la roue au moyeu 13.Lorsque l'écrou 10,ou la tête de vis,est engagé dans l'empreinte 9 de l'adaptateur,les vis 16,au nombre de trois,sont vissées de manière que leurs pointes coniques pénètrent dans les faces correspondantes de l'organe de fixation.Lorsque le couple de serrage optimal est atteint,les têtes de vis 16a se cassent d'elles-mêmes.

Pour assurer la fixation de la roue,il suffit alors, comme montré à la figure 4 dans le cas d'une autre forme d'exécution,et après vissage manuel de l'écrou 10 avec l'adaptateur 1 sur le goujon 12,de parfaire le serrage au moyen de l'organe d'entrainement intermédiaire 2,lui-même entrainé par la clé de serrage 3.

Il est à noter que,lorsque l'organe d'entrainement intermédiaire 2 est engagé dans l'adaptateur,il est parfaitement positionné radialement par le centrage de sa partie cylindrique 20 dans la portée 19 de l'adaptateur et,longitudinalement,par butée de son épaulement 22 contre le bord 23 de la collerette 18.Pour éviter que,sous l'effet du couple de rotation important,les doigts 6 soient cisaillés ou déformés,l'opérateur doit vérifier l'engagement de ses doigts dans les alésages 7 correspondants de l'adaptateur en vérifiant que l'épaulement 22 vient bien en contact avec le bord 23 de la collerette 18.Il est évident que les mêmes précautions doivent être prises lors de l'opération de dévissage qui s'effectue exactement de la même façon.

Avantageusement,et pour éviter que les vibrations consécutives aux déplacements du véhicule,tendent à dévisser les vis 16,celles-ci sont calées dans leur taraudage 17 par un joint-colle 31 interposé entre elles et ce taraudage et les rendant indémontables.Ce joint-colle est aussi interposé entre l'empreinte 9 et l'écrou 10 ou la tête de vis,de manière à compenser les jeux fonctionnels entre. ces deux pièces.Ce joint-colle répartit l'effort exercé, lors du montage et du démontage de la roue,sur l'ensemble adaptateur-écrou,c'est-à-dire évite que cet effort se répartisse uniquement sur les pieds des vis,mais au contraire,sur toutes les faces de l'écrou,malgré les variations de dimensions existant entre cet écrou et l'adaptateur.De plus,par son rôle anti-vibratoire,il s'oppose à ce que les vibrations de la roue se transmettent à l'adaptateur et favorisent le dévissage des vis.

Dans la forme d'exécution représentée à la figure 4, l'adaptateur 1 présente,dans sa partie postérieure,une partie cylindrique 1a dont la dimension extérieure correspond sensiblement à celle de la douille d'une clé de serrage traditionnelle,ce qui lui permet de s'engager sans difficulté dans les puits 24 réalisés dans la jante 15 pour loger les organes de fixation .Sa partie cylindrique 1a est raccordée à sa collerette 18 par une partie tronconique 1b. Cette partie tronconique améliore l'indémontabilité de l'adaptateur.En effet,de par sa forme,elle rend plus difficile son serrage par une pince à mâchoires parallèles,puisque,comme montré figure 6,ces mâchoires 32 ne viennent en contact avec elle que par deux points et non par une génératrice,comme c'est le cas avec un adaptateur cylindrique du type représenté à la figure 1.Cette partie tronconique 1b qui,dans la forme d'exécution représentée,a sa partie de plus grand diamètre près de l'extrémité antérieure,peut également présenter une conicité
inverse.

Avantageusement,de manière encore à éviter cette prise,l'adaptateur 1 est réalisé en acier et soumis à un
traitement de cémentation,lui-même suivi d'un traitement
de trempe par haute fréquence localisé sur la partie tronconique 1b,comme montré en 11 à la figure 2.Ainsi,la partie tronconique 1b présente une dureté de surface très
importante s'opposant à toute prise,c'est-à-dire à toute
pénétration des dents des mâchoires de tout outil classique tel  que:pince-étau,clé serre-tube ou autres...De la
sorte,de telles clés glissent sur la portée tronconique
sans pouvoir prendre prise sur elle pour l'entrainer en
rotation.De plus,l'absence de trempe à haute fréquence
sur les autres parties de l'adaptateur permet à celles-ci
de se déformer sans casser lorsqu'elles sont soumises à
des chocs,ce qui rend pratiquement impossible l'entrainement en rotation de cet adaptateur.

Comme montré plus en détail aux figures 2 à 6,la collerette de l'adaptateur 18 est munie d'une gorge 25 pour
l'encliquetage de la nervure 26 d'un capot 27 d'obturation du logement 21.Ce capot,qui constitue enjoliveur,
empêche que de la boue et autres matières viennent obturer les alésages 7 nécessaires à l'entrainement en rotation de l'adaptateur 1 .

Comme montré à la figure 3,et de façon connue,ces
alésages 7 sont répartis irrégulièrement,tant angulairement que radialement,afin d'éviter qu'ils puissent être
entrainés par un organe d'entrainement intermédiaire 2
différent de celui qui leur correspond.

Il ressort de ce qui précède que le dispositif selon
l'invention est très efficace puisqu'il est inviolable
sans recours à l'organe d'entrainement intermédiaire et
qu'il permet de conserver l'organe de fixation de roue
d'origine,ce qui rend pratiquement universelle son application .

Dans le but de réduire encore le nombre d'adaptateurs, c'est-à-dire d'assurer l'entrainement de tout type d'écrou à partir d'un seul type d'adaptateur ,l'empreinte 9 réalisée dans l'adaptateur peut correspondre à la plus grande dimension des écrous devant être entrainés et être associée,avant son montage sur l'organe de fixation correspondant,à une bague compensatrice 28 montrée figure 5. Cette bague,qui est hexagonale,a une épaisseur qui est sensiblement égale à la moitié de la différence entre les dimensions sur plat de l'empreinte 9 et de l'écrou correspondant .Ainsi,avec un jeu de bagues,il est possible de satisfaire à toutes les dimensions.Cette bague,réalisée par découpage et emboutissage,est ouverte en 28a. Cette ouverture facilite son introduction dans l'empreinte 9 de l'adaptateur 1 par rapprochement élastique de ses pans 28b qui reviennent ensuite automatiquement en position. Il est évident qu'elle peut être fermée.Elle présente,sur chacun de ses pans,des ouvertures 29 pour le passage des vis de fixation 16. Une telle bague peut également être utilisée entre l'empreinte 5 de la clé 3 et la partie hexagonale 4 de l'organe d'entrainement intermédiaire 2.

Il est évident que le dispositif,qui a été décrit dans le cas de son application aux organes de fixation de voitures,peut également être utilisé chaque fois qu'il est nécessaire de protéger contre le vol des assemblages de pièces réalisées par système vis-écrou.

8

-REVENDICATIONS-

1-Dispositif anti-vol universel,notamment pour écrous et vis de fixation de roues de véhicules,du type muni de creux (7) ou saillies aptes à coopérer avec des saillies (6) ou creux complémentaires ménagés à l'une des extrémités d'un organe d'entrainement intermédiaire(2),lui-même pourvu à son autre extrémité d'un profil polygonal (4) complémentaire de celui (5) d'une clé classique (3) de démontage,caractérisé en ce qu'il est constitué par un adaptateur (1) dont l'extrémité postérieure est agencée en forme de douille (9) d'entrainement d'écrou et comporte des moyens (16) aptes à réaliser une liaison indémontable entre cet adaptateur (1) et l'organe de fixation (10) qu'il est destiné à coiffer,tandis que son extrémité antérieure,apte à coopérer avec l'organe d'entrainement intermédiaire (2) ,comporte des moyens de positionnement transversal (19) et longitudinal (23) de cet organe d'entrainement.

2-Dispositif selon la revendication 1,caractérisé en ce que les moyens réalisant la liaison indémontable entre l'adaptateur (1) et l'organe de fixation (10) sont constitués par des vis de pression (16) vissées radialement à proximité de l'extrémité antérieure de l'adaptateur (1), débouchant dans son empreinte intérieure polygonale (9) dans la zone de celle-ci comportant des plats,ces vis étant associées à des moyens (31) s'opposant à leur démontage.

3-Dispositif selon la revendication 2,caractérisé en ce que chaque vis de pression (16),de longueur égale à la hauteur de l'alésage taraudé correspondant de l'adaptateur,est prolongée par une tête de manoeuvre (16a)susceptible d'être rompue après blocage.

4-Dispositif selon l'une quelconque des revendications 2 et 3,caractérisé en ce que les vis de pression(16) sont calées en rotation dans leur logement par un joint-colle anti-vibratoire (31) également interposé dans l'espace délimité par les tolérances de fabrication entre l'organe de fixation (10) et l'empreinte de l'adaptateur (1).

5-Dispositif selon la revendication 1 et l'une quelconque des revendications 2 à 4, caractérisé en ce que l'extrémité antérieure de l'adaptateur est munie d'une collerette (18) qui,saillant d'une face diamétrale (8) d'appui pour l'organe d'entrainement (2),constitue intérieurement portée de centrage (19) pour une partie cylindrique complémentaire (20) de cet organe d'entrainement et,par son bord (23),et avec un épaulement (22) de la partie cylindrique (20) ,indicateur d'engagement de cet organe d'entrainement dans l'adaptateur.

6-Dispositif selon la revendication 1 et l'une quelconque des revendications 2 à 5,caractérisé en ce que l'adaptateur (1) présente extérieurement,à sa partie postérieure (1a),une forme cylindrique qui,de diamètre inférieur au diamètre intérieur des puits (24) ménagés dans les jantes de roues pour le passage des organes de fixation sur le moyeu,est raccordée à sa partie antérieure par une partie tronconique (1b).

7-Dispositif selon la revendication 1 et la revendication 6,caractérisé en ce que l'adaptateur (1),réalisé en acier,est soumis à une cémentation suivie,uniquement dans sa partie tronconique(1b),par une trempe haute fréquence .

8-Dispositif selon la revendication 1 et l'une quelconque des revendications 2 à 7,caractérisé en ce que,avant son montage sur un organe de liaison(10) de plus petite dimension transversale que celle de l'empreinte (9) de l'adaptateur (1),cette empreinte (9) reçoit une bague polygonale (28) compensatrice de jeux,ayant le même profil que celui extérieur de cet organe (10) et de l'empreinte (9) et comportant,localement,des ouvertures (29) pour le passage des moyens (16) assurant la liaison indémontable entre ces deux éléments.

0070247

FIG_1

FIG_3

FIG_2

FIG_6

FIG_4

FIG_5